# EUROPEAN PATENT APPLICATION

(11) **EP 2 368 745 A1**
(43) Date of publication of application: **28.09.2011**
(21) Application number: 11159792.8
(22) Date of filing: 25.03.2011
(51) Int. Cl.: B60L 3/04, B60L 11/18, B62M 6/50, B60L 1/16

(54) **System control apparatus for a mobile body, and mobile body therewith**

(30) Priority: 25.03.2010 JP 2010070628; 28.02.2011 JP 2011041958
(71) Applicant: Sanyo Electric Co., Ltd., Osaka 570-8677 (JP)
(72) Inventor: Takao, Hiroshi, Moriguchi City Osaka 570-8677 (JP)
(74) Representative: Glawe, Delfs, Moll

(57) **Abstract**

A system control apparatus (30) for a mobile body which controls a motor (15) and the entire system of the mobile body while monitoring the remaining capacity of a battery (20) includes: a remaining capacity estimator (21a) which estimates the remaining capacity of the battery (20); a remaining capacity corrector (21b) which corrects the remaining capacity of the battery (20) estimated by the remaining capacity estimator (21a) based on at least one of the voltage, current, and temperature of the battery (20); and a system controller (31) which turns off the driving of the motor (15) on the condition that the remaining capacity of the battery (20) corrected by the remaining capacity corrector (21b) becomes equal to or less than a first predetermined remaining capacity.

## Description

### BACKGROUND OF THE INVENTION

### 1. Field of the Invention

The present invention relates to a system control apparatus for controlling a motor and an entire system of a mobile body, such as an electric vehicle, incorporating a battery. The present invention also relates to a mobile body, such as an electric vehicle, incorporating such a system control apparatus.

### 2. Description of Related Art

It is conventionally common that automobiles and motorcycles use, as their driving power source, engines that derive driving force from gasoline or light oil as fuel. Today, however, from the perspective of environmental protection, much attention is paid to the development of electric vehicles that use, as their driving power source, motors that derive driving force from electric power as energy.

Like personal computers, some electric vehicles incorporate batteries, which are secondary, or rechargeable, batteries, so that electric power is supplied from those batteries to motors, controllers, etc. The batteries incorporated in applications such as electric vehicles and personal computers can be recharged with commercial electric power distributed to households and offices; as those applications are used, the batteries go through repeated cycles of charging and discharging.

With such batteries, one conventional, widely-known method of estimating the remaining capacity is by current integration (totalizing), that is, by integrating (totalizing) the electric current through the battery. Another known method involves previously preparing a map indicating the correspondence, or investigating the correlation, between the battery remaining capacity and the battery voltage and current during charging and discharging so that the remaining capacity is determined based on the map or correlation. These methods of estimating and determining the battery remaining capacity have been disclosed as conventional technology.

Inconveniently, however, it is known that estimating the battery remaining capacity by current integration is comparatively easy to perform but low in accuracy. Also inconveniently, determining the battery remaining capacity based on a map indicating the correspondence, or based on the correlation, between the battery remaining capacity and the battery voltage and current is, if performed constantly as the battery remaining capacity diminishes, likely to impose a heavy burden on the control. On the other hand, efforts to offer user-friendly applications are often met with expectation for constant indication of the battery remaining capacity.

In particular, in electric vehicles, since they consume large amounts of electric power, the battery remaining capacity needs to be determined as accurately as possible. In addition, it is necessary to turn off the driving of the motor and to turn off the supply of electric power to the entire system with proper timing in accordance with the battery remaining capacity.

For example, if the driving of the motor is turned off earlier than the proper timing, the traveled distance may end up shorter than it should with the actual battery remaining capacity. By contrast, if the driving of the motor is turned off later than the proper timing, the electric power supply to the entire system may be turned off before the driving of the motor is turned off. If the electric power supply to the entire system is turned off earlier than the proper timing, there is the same concern. And if the electric power supply to the entire system is turned off later than the proper timing, the battery may be overdischarged, degrading the battery and shortening its lifetime.

As discussed above, a sudden turning-off of the supply of electric power to the entire system during the traveling of an electric vehicle causes inconveniences, and may even bring about danger. Thus, it is necessary to carefully monitor the battery remaining capacity as it diminishes. In addition, once the battery remaining capacity is scarce, it is preferable to control the electric vehicle in such a way as to turn off the driving of the motor first and then turn off the electric power supply to the entire system in this order.

### SUMMARY OF THE INVENTION

To eliminate the inconveniences mentioned above, it is an object of the present invention to provide a system control apparatus for a mobile body, such as an electric vehicle, which can avoid the risk of a sudden turning-off of the supply of electric power to the entire system during the traveling of a mobile body, such as an electric vehicle, by monitoring the battery remaining capacity while preventing a heavy load from being imposed on the control. It is another object of the present invention to provide a highly reliable mobile body, such as an electric vehicle, incorporating such a system control apparatus.

To achieve the above object, according to one aspect of the present invention, a system control apparatus for a mobile body which controls a motor and the entire system of the mobile body while monitoring the remaining capacity of a battery includes: a remaining capacity estimator which estimates the remaining capacity of the battery; a remaining capacity corrector which corrects the remaining capacity of the battery estimated by the remaining capacity estimator based on at least one of the voltage, current, and temperature of the battery; and a system controller which turns off the driving of the motor on the condition that the remaining capacity of the battery corrected by the remaining capacity corrector becomes equal to or less than a first predetermined remaining capacity.

It should be noted that the term "predetermined" in the designation "first predetermined remaining capacity" above means "previously set." Accordingly, the first predetermined remaining capacity is a previously set particular remaining capacity of the battery, and may be a capacity of, for example, 3% or 5% relative to the total capacity of the battery. The embodiments described later deal with cases where the first predetermined remaining capacity is set at 3%, but this is not meant to limit it to any specific value.

Moreover, the expression "to turn off the driving of the motor" above means "to stop the driving of the motor." It should be noted that, at this time, the power to the entire system of the mobile body remains on, and thus electric power keeps being supplied, for example, to the control system other than for motor driving, to turn on a light, etc. Thus, even after the driving of the motor is stopped, it is possible, for example, to turn on a light by use of the remaining electric power. In this way, with a mobile body, and one operated by a human in particular, it is possible to achieve improved safety be it during the day or at night.

In the system control apparatus for a mobile body configured as described above, preferably, the system controller turns off the power to the entire system on the condition that the remaining capacity of the battery corrected by the remaining capacity corrector becomes equal to or less than a second predetermined remaining capacity which is less than the first predetermined remaining capacity.

It should be noted that the term "predetermined" in the designation "second predetermined remaining capacity" above means "previously set" as in "first predetermined remaining capacity" mentioned previously. Accordingly, the second predetermined remaining capacity is a previously set particular remaining capacity of the battery, and may be a capacity of, for example, 0% or 1% relative to the total capacity of the battery so long as it is less than the first predetermined remaining capacity. The embodiments described later deal with cases where the second predetermined remaining capacity is set at 0%, but this is not meant to limit it to any specific value.

Moreover, the expression "to turn off the power to the entire system" above means, for example, to bring the mobile body into a state equivalent to that where the main switch is off. For example, in a case where the mobile body is an electric vehicle, bringing it into a state where any of a headlight, a meter, and a turn signal is not operating is referred to as "turning off the power to the entire system." That is, in the state where the power to the entire system is off, the headlight and turn signals remain off and the meter gives no indication. The elements of which the operation is restricted when the power to the entire system is turned off include the control system other than for motor driving, wipers, audio equipment, an air conditioner, etc.

In the system control apparatus for a mobile body configured as described above, preferably, the remaining capacity estimator estimates the remaining capacity of the battery by integrating the current through the battery.

In the system control apparatus for a mobile body configured as described above, preferably, the remaining capacity corrector has a map from which a correction execution voltage is obtained which corresponds to a particular capacity of the battery based on a relationship between the current and temperature of the battery, and the remaining capacity corrector corrects the estimated remaining capacity of the battery estimated by the remaining capacity estimator on the condition that the voltage of the battery becomes equal to or less than each of two correction execution voltages obtained from the map, one corresponding to the first predetermined remaining capacity and another corresponding to a second predetermined remaining capacity which is less than the first predetermined remaining capacity.

It should be noted that the "map" above is one from which a correction execution voltage is obtained that corresponds to a particular remaining capacity of the battery on the basis of the relationship between the current and temperature of the battery, and is used for the correction of the estimated remaining capacity of the battery as estimated by the remaining capacity estimator. The remaining capacity corrector corrects the estimated remaining capacity of the battery estimated by the remaining capacity estimator on the basis of the voltage, current, and temperature of the battery, and therefore the map can be constructed with the voltage, current, and temperature of the battery handled as variables respectively. Here, it is only necessary to use at least one of the voltage, current, and temperature of the battery as a variable. That is, it is possible to use only one of the voltage, current, and temperature of the battery as a variable, or to use a combination of any two of them as variables.

In the system control apparatus for a mobile body configured as described above, preferably, motor driving restriction is performed to limit the discharge current according to the voltage of the battery with respect to a voltage corresponding to a second predetermined remaining capacity which is less than the first predetermined remaining capacity.

In the system control apparatus for a mobile body configured as described above, preferably, motor driving restriction is performed, on the condition that the voltage of the battery becomes equal to or less than a voltage corresponding to a second predetermined remaining capacity which is less than the first predetermined remaining capacity, to limit the discharge current by adjusting the output of the motor such that the voltage of the battery becomes more than the voltage corresponding to the second predetermined remaining capacity.

It should be noted that a process for definitively determining that the remaining capacity of the battery equals the first predetermined remaining capacity may require a predetermined length of time (for example, several seconds to several minutes). In that case, the voltage of the battery may reach the voltage corresponding to the second predetermined remaining capacity while the motor is being driven. This is the reason that motor driving restriction is performed, on the condition that the voltage of the battery becomes equal to or less than the voltage corresponding to the second predetermined remaining capacity, to limit the discharge current by adjusting the output of the motor so that the voltage of the battery remains above the voltage corresponding to the second predetermined remaining capacity.

In the system control apparatus for a mobile body configured as described above, preferably, motor driving restriction is performed to limit the discharge current according to the voltage of the battery with respect to a voltage corresponding to the first predetermined remaining capacity.

In the system control apparatus for a mobile body configured as described above, preferably, motor driving restriction is performed, on the condition that the voltage of the battery reaches a voltage corresponding to the first predetermined remaining capacity, to limit the discharge current by adjusting the output of the motor such that the voltage of the battery does not become less than the voltage corresponding to the first predetermined remaining capacity.

In the system control apparatus for a mobile body configured as described above, preferably, the voltage of the battery at which the motor driving restriction is performed is calculated by a battery controller which is provided in the battery to control the operation of the battery.

According to another aspect of the invention, a mobile body such as an electric vehicle incorporates a system control apparatus as described above.

It should be noted that the term "mobile body" above encompasses not only electric bicycles and electric vehicles such as motorcycles and three- and four-wheel automobiles but also watercraft such as motorboats, amusement cars, boats, and other vehicles, and any vehicles that use a motor as their driving power source and that move unmanned, that is, with no man aboard.

In a mobile body incorporating a system control apparatus as described above, there may be provided a headlight which shines light in front of the mobile body, so that the system controller turns off the headlight when the remaining capacity of the battery corrected by the remaining capacity corrector becomes equal to or less than a second predetermined remaining capacity which is less than the first predetermined remaining capacity.

### BRIEF DESCRIPTION OF THE DRAWINGS

Fig. 1 is a side view showing an example of an electric vehicle as a mobile body incorporating a system control apparatus according to a first embodiment of the invention;
Fig. 2 is a block diagram showing the configuration of the electric vehicle shown in Fig. 1;
Fig. 3 is a flow chart showing operation related to the calculation of the battery remaining capacity;
Fig. 4 is a flow chart showing operation related to determination as to motor driving cessation and system power cessation;
Fig. 5 is a flow chart showing operation related to determination as to motor driving restriction;
Fig. 6 is a graph showing the relationship between how the battery remaining capacity changes over time and how the electric vehicle operates, in a case where the estimated remaining capacity is less than the actual remaining capacity;
Fig. 7 is a graph showing the relationship between how the battery remaining capacity changes over time and how the electric vehicle operates, in a case where the estimated remaining capacity is more than the actual remaining capacity;
Fig. 8 is a graph showing the relationship between the battery voltage and battery discharge restriction;
Fig. 9 is a flow chart showing operation related to determination as to motor driving restriction in a system control apparatus according to a second embodiment of the invention;
Fig. 10 is a graph showing the relationship between the battery voltage and battery discharge restriction in connection with the flow of operation shown in Fig. 9;
Fig. 11 is a side view showing an example of an electric vehicle as a mobile body incorporating a system control apparatus according to a third embodiment of the invention; and
Fig. 12 is a block diagram showing the configuration of the electric vehicle shown in Fig. 11.

### DETAILED DESCRIPTION OF PREFERRED EMBODIMENTS

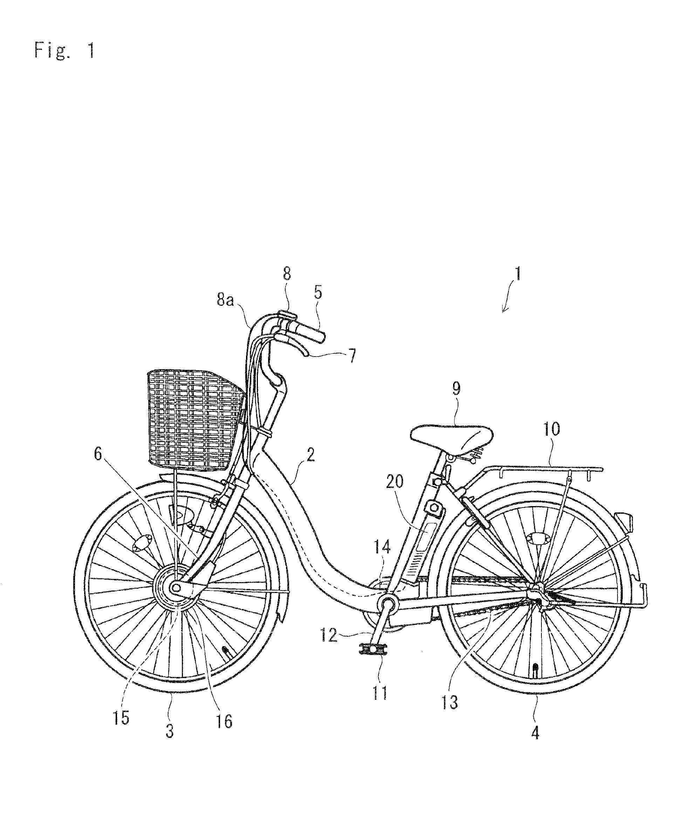

Embodiments of the present invention will be described below with reference to the accompanying drawings, Figs. 1 to 12. The following description takes up, as examples of electric vehicles as mobile bodies incorporating a system control apparatus according to the invention, electric bicycles for a first and a second embodiment and a motorcycle for a third embodiment.

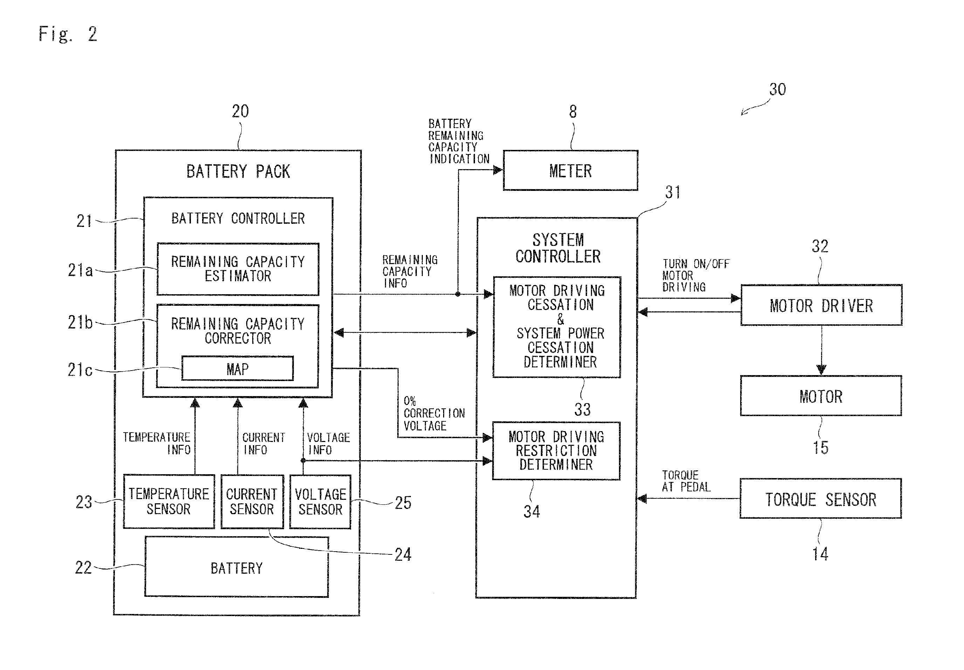

First, a description will be given of the structure of an electric vehicle as a mobile body incorporating a system control apparatus according to the first embodiment of the invention, with reference to Figs. 1 and 2. Fig. 1 is a side view showing an example of an electric vehicle incorporating a system control apparatus, and Fig. 2 is a block diagram showing the configuration of the electric vehicle.

As shown in Fig. 1, the electric vehicle 1 is an electric bicycle that is built on a frame 2 as a main skeleton and that has a front wheel 3 and a rear wheel 4 at the front and rear, respectively, of the frame 2.

The frame 2 has a front-end part thereof bent upward, and the front-end part supports the front wheel 3 and a handlebar 5 in a way that these can be steered. The front wheel 3 is supported on a front fork 6 which extends downward from the front-end part of the frame 2. The handlebar 5 is fitted with a brake lever 7 and a meter 8. The brake lever 7 is operated to brake the electric vehicle 1 in motion and to keep it at rest. The meter 8 is connected to a battery pack 20 via a signal lead 8a to receive and indicate information on the battery remaining capacity.

In a substantially central part of the electric vehicle 1 in the front/rear direction, there are provided a saddle 9, on which the rider sits, and a battery pack 20. The battery pack 20 is disposed right under the saddle 9. At the rear of the saddle 9, over the rear wheel 4, there is provided a rear carrier 10.

In a substantially central part of the electric vehicle 1 in the front/rear direction, under the saddle 9, there are provided a pedal 11 and a pedal crank 12. The pedal crank 12 is coupled to a driving sprocket (not shown), and the rear wheel 4 is coupled to a driven sprocket (not shown), with a chain 13 wound between and around these sprockets. Thus, as the pedal 11 is stepped on, the pedal crank 12 and hence the driving sprocket rotates, and the rotating force is transmitted further, via the chain 13 and the driven sprocket, to the rear wheel 4.

The electric vehicle 1, which is an electric bicycle, is also provided with a torque sensor 14 and a motor 15. The torque sensor 14 is disposed near the pedal crank 12, and detects the torque with which the force applied to the pedal 11 as it is stepped on drives the rear wheel 4. The motor 15 is disposed in a front hub 16 of the front wheel 3. According to a signal from the torque sensor 14, the motor 15 is supplied with electric power from the battery pack 20 to make the front wheel 3 rotate.

As shown in Fig. 2, for overall operation control, the electric vehicle 1 is further provided with a system control apparatus 30 inside it. The system control apparatus 30 includes a system controller 31, a motor driver 32, and the above-mentioned battery pack 20.

The system controller 31 is built around a common microcomputer, and functions as a processor that controls the sequence of operation related to the running of the electric vehicle 1 according to a program and data stored and entered in the microcomputer. The system controller 31 includes a motor driving cessation (turning-off) and system power cessation (turning-off) determiner 33 and a motor driving restriction determiner 34. The motor driving cessation and system power cessation determiner 33 determines, according to the battery remaining capacity of the battery pack 20, the timing with which to turn off the driving of the motor (to stop the driving of the motor) and the timing with which to turn off the system power (the supply of electric power to the system). The motor driving restriction determiner 34 determines, according to the battery voltage, whether to restrict the driving of the motor 15.

It should be noted that, in the electric vehicle 1, which is an electric bicycle, turning off the system power means bringing the electric vehicle 1 into a state where any of, for example, the meter 8 and the control system other than for motor driving is not in operation. Thus, with the system power off, the meter 8 gives no indication.

The motor driver 32 controls the electric power supplied from the battery pack 20 to drive the motor 15, and is realized with, for example, an inverter. To run the electric vehicle 1, the system controller 31 transmits to the motor driver 32 a target torque in accordance with the force applied to the pedal 11 as it is stepped on as detected by the torque sensor 14. Then, according to control instructions from the system controller 31, the motor driver 32 adjusts the current and voltage with which it drives the motor 15.

The battery pack 20 includes a battery controller 21, a battery 22, a temperature sensor 23, a current sensor 24, and a voltage sensor 25.

The battery controller 21 monitors the cell voltage, current, temperature, remaining capacity, etc. of the battery 22, and controls its charging and discharging safely. The battery controller 21 includes a remaining capacity estimator 21a, which estimates the battery remaining capacity of the battery 22, and a remaining capacity corrector 21b.

The remaining capacity estimator 21a integrates (totalizes) the current through the battery 22 as detected by the current sensor 24, and thereby estimates the remaining capacity of the battery 22. In this way, by use of a comparatively easy method of estimating the remaining capacity of the battery 22, it is possible to reduce as much as possible the burden on the control of the entire system of the electric vehicle 1.

Except at critical timing such as when the driving of the motor 15 is turned off or when the electric power supply to the entire system is turned off, the accuracy of the indication of the battery remaining capacity on the meter 8 need not be very high. Accordingly, most of the time, the battery controller 21 uses, as the battery remaining capacity indicated on the meter 8, the estimated remaining capacity that is calculated by the remaining capacity estimator 21a with a reduced burden on the control of the entire system.

The remaining capacity corrector 21b includes a map 21c from which a correction execution voltage is obtained that corresponds to a particular remaining capacity of the battery 22 based on the relationship between the current and temperature of the battery 22. Stored in the map 21c are, for example, one corresponding to a first predetermined remaining capacity of 3% and one corresponding to a second predetermined remaining capacity of 0%. The remaining capacity corrector 21b corrects the estimated remaining capacity of the battery 22 as estimated by the remaining capacity estimator 21a on the condition that the voltage of the battery 22 falls to or below each of the correction execution voltages corresponding remaining capacities of 3% and 0%. Thus, when the estimated remaining capacity of the battery 22 is 3% and again when it is 0%, the remaining capacity can be corrected to be more accurate.

It should be noted that the map 21c is one from which a correction execution voltage is obtained that corresponds to a particular remaining capacity of the battery 22 on the basis of the relationship between the current and temperature of the battery 22, and is used for the correction of the estimated remaining capacity of the battery 22 as estimated by the remaining capacity estimator 21 a. The remaining capacity corrector 21b corrects the estimated remaining capacity of the battery 22 estimated by the remaining capacity estimator 21a on the basis of the voltage, current, and temperature of the battery 22, and therefore the map 21c can be constructed with the voltage, current, and temperature of the battery 22 handled as variables respectively.

Here, it is only necessary to use at least one of the voltage, current, and temperature of the battery 22 as a variable. That is, it is possible to use only one of the voltage, current, and temperature of the battery 22 as a variable, or to use a combination of any two of them as variables. For example, a correction execution voltage may be determined according to the voltage of the battery 22, irrespective of the current or temperature. For another example, a correction execution voltage may be determined according to the current, or temperature, of the battery 22. For yet another example, a correction execution voltage may be determined according to the current and temperature of the battery 22.

The battery 22 is composed of a plurality of battery cells connected in series and in parallel. The temperature sensor 23 is a sensor that detects the temperature of the battery 22, and may comprise a plurality of sensors provided one for every predetermined number of battery cells. The current sensor 24 measures the current through the battery 22 during its charging and discharging. The voltage sensor 25 measures the voltage across the battery 22, or the voltage across each battery cell in the battery 22.

It should be noted that the battery 22 is the source of electric power supply to all the constituent components of the electric vehicle 1 that need electric power.

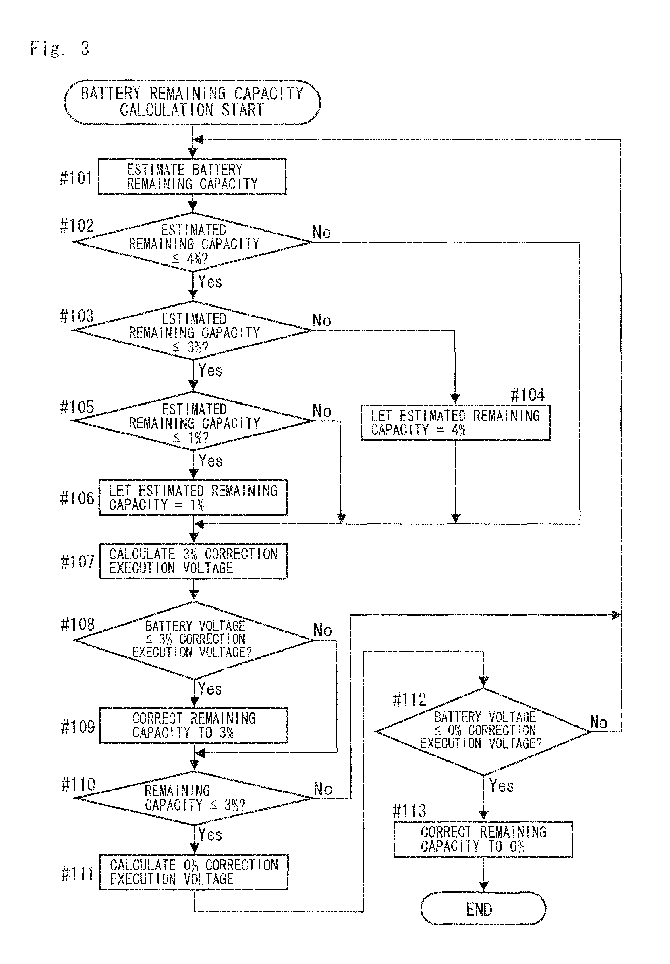

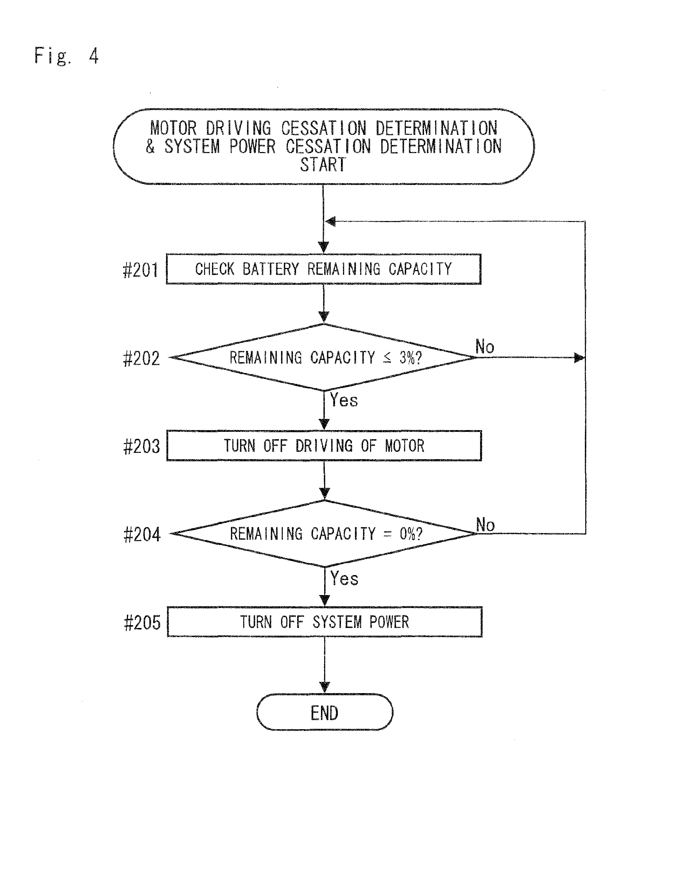

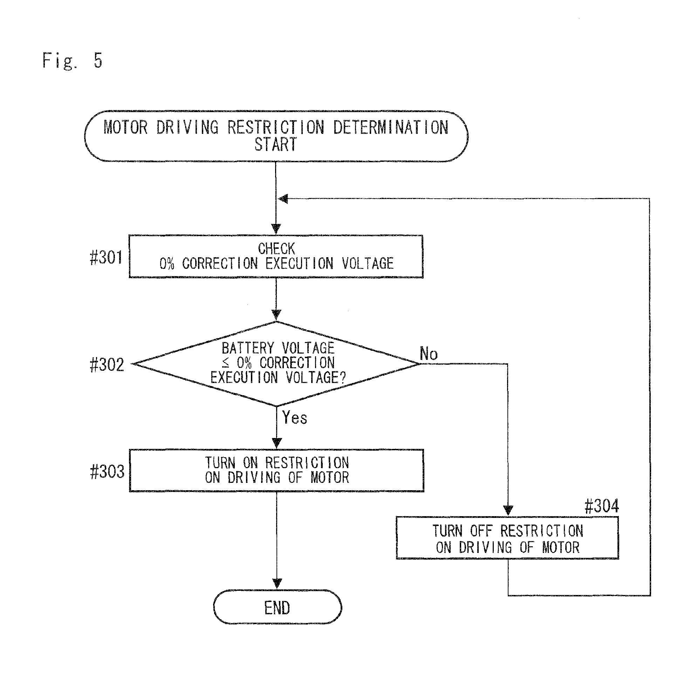

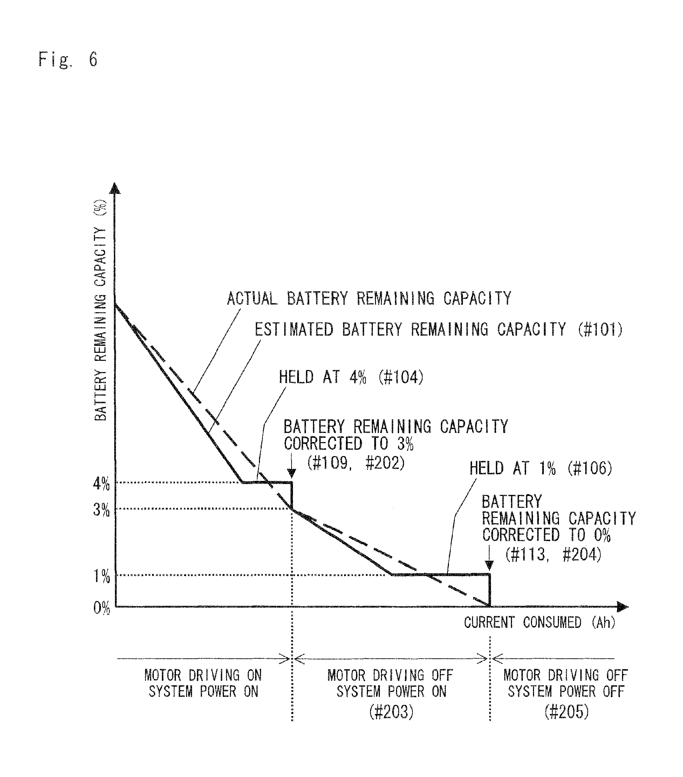

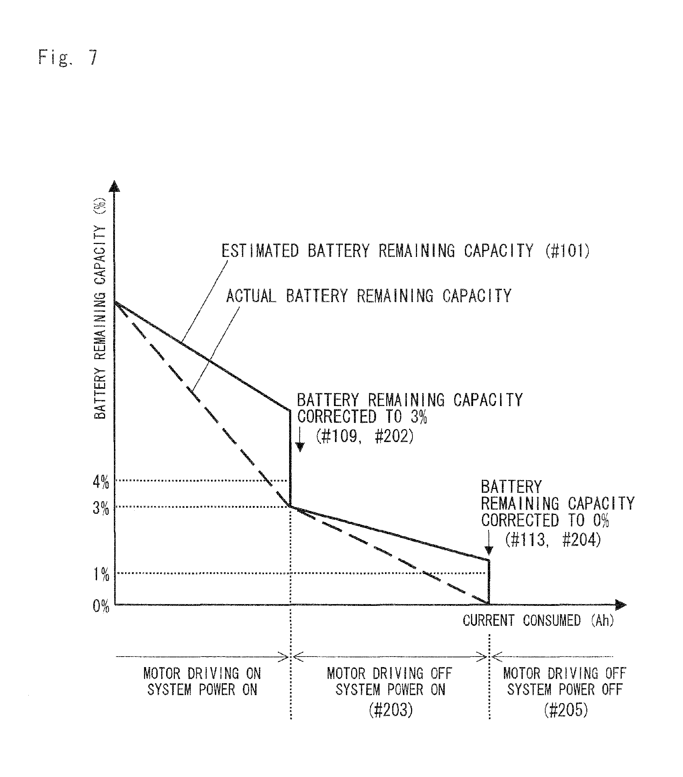

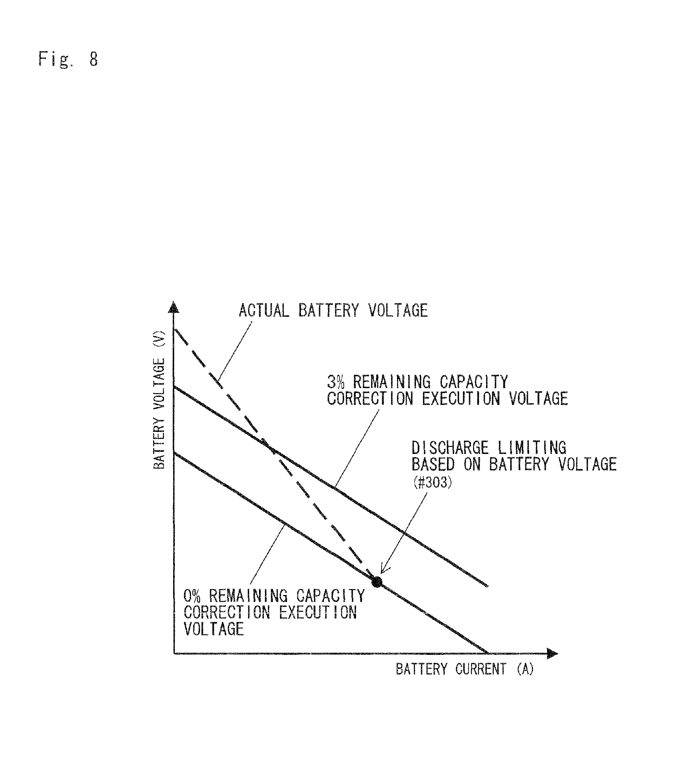

Next, a description will be given of how the system control apparatus 30 in the electric vehicle 1 operates in relation to the remaining capacity and voltage of the battery 22, along the flow shown in Figs. 3 to 5 and with reference to Figs. 6 to 8. Fig. 3 is a flow chart showing the operation related to the calculation of the battery remaining capacity, Fig. 4 is a flow chart showing the operation related to determination as to motor driving cessation (turning-off) and system power cessation (turning-off), and Fig. 5 is a flow chart showing the operation related to determination as to motor driving restriction. Fig. 6 is a graph showing the relationship between how the battery remaining capacity changes over time and how the electric vehicle operates, in a case where the estimated remaining capacity is less than the actual remaining capacity, and Fig. 7 is a graph showing the relationship between how the battery remaining capacity changes over time and how the electric vehicle operates, in a case where the estimated remaining capacity is more than the actual remaining capacity. Fig. 8 is a graph showing the relationship between the battery voltage and battery discharge restriction.

It should be noted that Figs. 6 and 7, where the consumed current through the battery 22 is taken along the horizontal axis and the remaining capacity is taken along the vertical axis, show the relationship between how the estimated remaining capacity of the battery 22 changes (solid line) and how the actual remaining capacity changes (broken line). Fig. 8, where the current through the battery 22 is taken along the horizontal axis and the voltage is taken along the vertical axis, shows the relationship between, on one hand, the correction execution voltages corresponding to remaining capacities of 3% and 0% (referred to as the 3% and 0% correction execution voltages, both indicated by solid lines) and, on the other hand, the actual voltage of the battery 22 (broken line).

First, the flow of operation related to the calculation of the remaining capacity of the battery 22 will be described with reference to Figs. 3, 6, and 7.

When the electric vehicle 1 is in a state where the system power is on ("START" in Fig. 3), the system controller 31 in the system control apparatus 30 makes the battery controller 21 in the battery pack 20 estimate the remaining capacity of the battery 22 (step #101 in Fig. 3; #101 in Figs. 6 and 7). The battery controller 21 integrates the current through the battery 22 and thereby estimates the remaining capacity. For example, as shown in Fig. 6, the estimated remaining capacity (solid line) of the battery 22 changes while remaining slightly less than the actual remaining capacity (broken line). Or, as shown in Fig. 7, the estimated remaining capacity (solid line) of the battery 22 changes while remaining slightly more than the actual remaining capacity (broken line). It should be noted that the estimated remaining capacity and the actual remaining capacity may also change while remaining approximately equal.

The battery controller 21 then checks whether or not the estimated remaining capacity of the battery 22 has fallen to or below 4%, which is close to the first predetermined remaining capacity of 3% (step #102). If the estimated remaining capacity has not yet fallen to or below 4% ("No" at step #102), the flow just proceeds to step #107.

If, at step #102, the estimated remaining capacity is 4% or less ("Yes" at step #102), then the battery controller 21 checks whether or not the estimated remaining capacity of the battery 22 has fallen to or below 3% (step #103). If the estimated remaining capacity of the battery 22 has not yet fallen to or below 3% ("No" at step #103), the battery controller 21 holds the estimated remaining capacity at 4% (step #104 in Fig. 3; #104 in Fig. 6).

If, at step #103, the estimated remaining capacity is 3% or less ("Yes" at step #103), then the battery controller 21 checks whether or not the estimated remaining capacity has fallen to or below 1%, which is close to the second predetermined remaining capacity of 0% (step #105). If the estimated remaining capacity has not yet fallen to or below 1% ("No" at step #105), the flow just proceeds to step #107. If the estimated remaining capacity has fallen to or below 1% ("Yes" at step #105), then the battery controller 21 holds the estimated remaining capacity at 1% (step #106 in Fig. 3; #106 in Fig. 6).

The battery controller 21 then calculates a 3% correction execution voltage for the purpose of correcting the estimated remaining capacity of the battery 22 to determine a more accurate remaining capacity (step #107). At this time, the battery controller 21 uses the map 21c to obtain the 3% correction execution voltage corresponding to a particular remaining capacity of the battery 22 based on the relationship between the current and temperature of the battery 22. Subsequently, the battery controller 21 checks whether or not the voltage of the battery 22 is equal to or less than the 3% correction execution voltage obtained at step #107 (step #108).

If the voltage of the battery 22 is equal to or less than the 3% correction execution voltage ("Yes" at step #108), the battery controller 21 corrects the remaining capacity of the battery 22 to 3% (step #109 in Fig. 3; #109 in Figs. 6 and 7). At this time, in a case where the estimated remaining capacity changes while remaining slightly less than the actual remaining capacity as shown in Fig. 6, the remaining capacity held at 4% at step #104 is corrected to 3%; in a case where the estimated remaining capacity changes while remaining slightly more than the actual remaining capacity as shown in Fig. 7, the remaining capacity left untouched at step #102 in Fig. 3 is corrected to 3%.

If the voltage of the battery 22 is above the 3% correction execution voltage ("No" at step #108), the flow just proceeds to step #110 with no correction to the remaining capacity.

It should be noted that a predetermined length of time is allocated to the checking of the voltage of the battery 22 for the process of definitively correcting the remaining capacity of the battery 22 to 3%. The predetermined length of time is, for example, so set that the checking is performed two or three times at intervals of two to three seconds.

Then, at step #110, the battery controller 21 checks whether or not the remaining capacity of the battery 22 after correction is 3% or less. If the remaining capacity of the battery 22 has not yet fallen to or below 3% ("No" at step #110), the flow returns to step #101, where the remaining capacity of the battery 22 is estimated.

If the remaining capacity of the battery 22 after correction has fallen to or below 3% ("Yes" at step #110), the battery controller 21 calculates a 0% correction execution voltage to more accurately verify whether the battery 22 is in a state of the second predetermined remaining capacity of 0% (step #111). At this time, the battery controller 21 uses the map 21c to obtain the 0% correction execution voltage corresponding to a particular remaining capacity of the battery 22 based on the relationship between the current and temperature of the battery 22. Subsequently, the battery controller 21 checks whether or not the voltage of the battery 22 is equal to or less than the 0% correction execution voltage obtained at step #111 (step #112).

If the voltage of the battery 22 is equal to or less than the 0% correction execution voltage ("Yes" at step #112), the battery controller 21 corrects the remaining capacity of the battery 22 to 0% (step #113 in Fig. 3; #113 in Figs. 6 and 7), and the flow of operation related to the calculation of the remaining capacity of the battery 22 ends ("END" in Fig. 3). If he voltage of the battery 22 is above the 0% correction execution voltage ("No" at step #112), the flow just returns to step #101 with no correction to the remaining capacity.

Next, the flow of operation related to determination as to cessation (turning-off) of the driving of the motor 15 and cessation (turning-off) of the supply of power to the entire system of the electric vehicle 1 will be described with reference to Figs. 4, 6, and 7.

When the electric vehicle 1 is in a state where the system power is on ("START" in Fig. 4), the system controller 31 in the system control apparatus 30 refers to the battery controller 21 in the battery pack 20 to check the remaining capacity of the battery 22 from time to time (step #201 in Fig. 4). The system controller 31 then checks whether or not the remaining capacity of the battery 22 has fallen to or below the remaining capacity of 3% corrected at step #109 in Fig. 3 (step #202). If the remaining capacity still is above 3% ("No" at step #202), the flow returns to step #201, where the remaining capacity of the battery 22 is checked.

If the remaining capacity of the battery 22 has fallen to or below the remaining capacity of 3% ("Yes" at step #202 in Fig. 4; #202 in Figs. 6 and 7), the system controller 31 transmits to the motor driver 32 a control instruction to turn off the driving of the motor 15, and thereby turns off the driving of the motor 15 (step #203 in Fig. 4; #203 in Figs. 6 and 7).

It should be noted that the power to the entire system of the electric vehicle 1 is still on, and therefore electric power remains supplied to the control system other than for motor driving, to turn on a light, etc. Thus, even after the driving of the motor 15 is stopped, it is possible, for example, to turn on a light by use of the remaining electric power. In this way, with a mobile body, and an electric vehicle 1 operated by a human in particular, it is possible to achieve improved visibility and hence safety be it during the day or at night.

Subsequently, the system controller 31 checks whether or not the remaining capacity of the battery 22 has fallen to or below the remaining capacity of 0% corrected at step #111 in Fig. 3 (step #204). If the remaining capacity still is above 0% ("No" at step #204), the flow returns to step #201, where the remaining capacity of the battery 22 is checked.

If the remaining capacity of the battery 22 after correction has fallen to or below 0% ("Yes" at step #204 in Fig. 4; #204 in Figs. 6 and 7), the system controller 31 turns off the power to the entire system of the electric vehicle 1 (step #205 in Fig. 4; #205 in Figs. 6 and 7), and the flow of operation related to determination as to cessation of the driving of the motor 15 and cessation of the supply of power to the entire system of the electric vehicle 1 ends ("END" in Fig. 4). Thus, the electric vehicle 1 is reliably controlled in such a way that the driving of the motor 15 is turned off first and then the power to the entire system is turned off. In this way, it is possible to avoid more effectively the risk of a sudden turning-off of the power to the entire system during the traveling of the electric vehicle 1.

It should be noted that, when the supply of electric power to the entire system is turned off, electric power stops being supplied, not to say for motor driving, to the control system, to turn on a light, etc. as well.

Next, the flow of operation related to determination as to restriction on the driving of the motor 15 will be described with reference to Figs. 5 and 8.

When the electric vehicle 1 is in a state where the system power is on ("START" in Fig. 5), the system controller 31 in the system control apparatus 30 refers to the battery controller 21 in the battery pack 20 to check the 0% correction execution voltage obtained at step #111 in Fig. 3 (step #301). The system controller 31 then checks whether or not the voltage of the battery 22 is equal to or less than the 0% correction execution voltage obtained at step #301 (step #302).

If the voltage of the battery 22 is equal to or less than the 0% correction execution voltage ("Yes" at step #302), the system controller 31 transmits to the motor driver 32 a control instruction to turn on restriction on the driving of the motor 15 (step #303 in Fig. 5). In response, the motor driver 32 performs motor driving restriction to limit the discharge current by adjusting the output of the motor 15 so that the voltage of the battery 22 remains above the 0% correction execution voltage (step #303 in Fig. 8).

Specifically, the discharge current is limited in such a way that, in Fig. 8, the voltage of the battery 22 remains in the region on the left of the intersection between the actual voltage of the battery 22 (broken line) and the 0% correction execution voltage (the lower solid line). In this way, it is possible to prevent the battery 22 from degrading and its lifetime from shortening as a result of the voltage of the battery 22 falling to and below the 0% correction execution voltage.

With respect to Fig. 8, it should be noted that, in reality, the correction execution voltages may vary with temperature. It should also be noted that, at steps #108 and #109 in the flow of operation related to the calculation of the remaining capacity of the battery 22 described with reference to Fig. 3, since usually a predetermined length of time is allocated to the checking for the process of definitively correcting the remaining capacity of the battery 22 to 3%, during this length of time, there can occur a period in which the voltage of the battery 22 falls to or below the 3% correction execution voltage.

Specifically, it can occur that, while the motor 15 is being driven, the voltage of the battery 22 reaches the 0% correction execution voltage. For this reason, it is on the condition that the voltage of the battery 22 falls to or below the 0% correction execution voltage as described above that the motor driver 32 performs motor driving restriction to limit the charge current by adjusting the output of the motor 15 so that the voltage of the battery 22 remains above the 0% correction execution voltage.

It should be noted that motor driving restriction for preventing the voltage of the battery 22 from falling below the 0% correction execution voltage may be performed other than on the condition that the voltage of the battery 22 falls to or below the 0% correction execution voltage. Motor driving restriction may instead be performed by limiting the discharge current in accordance with the voltage of the battery 22 with respect to the 0% correction execution voltage as the voltage of the battery 22 approaches the 0% correction execution voltage. For example, it is possible to adopt a process of restricting the discharge current to an increasingly great extent as the voltage of the battery 22 approaches the 0% correction execution voltage. In that case, it is possible to adopt a process such as one whereby, for example when the voltage difference of the voltage of the battery 22 from the 0% correction execution voltage is 1 V or less, the discharge current permitted through the battery 22 is reduced by the amount of current proportional to (1 V - (Voltage Difference)).

After motor driving restriction is performed, the flow of operation related to determination as to restriction on the driving of the motor 15 ends ("END" in Fig. 5).

On the other hand, if the voltage of the battery 22 is above the 0% correction execution voltage ("No" at step #302), motor driving restriction is turned off (step #304), and the flow just returns to step #301 with no restriction performed on the driving of the motor 15. In this way, the battery controller 21 calculates the 0% correction execution voltage of the battery 22 at or below which to perform motor driving restriction. This alleviates the burden on the system controller 31, and allows smoother control of the entire system of the electric vehicle 1.

With the embodiment described above, the remaining capacity of the battery 22 of the electric vehicle 1 is estimated by the remaining capacity estimator 21a (battery controller 21); thus it is possible to monitor the remaining capacity of the battery 22 while preventing a heavy burden from being imposed on the control. Moreover, the driving of the motor 15 is stopped on the condition that the remaining capacity of the battery 22 as corrected by the remaining capacity corrector 21b (battery controller 21) falls to or below 3%; thus, even thereafter, it is possible to turn on a light by use of the remaining electric power, and thereby to achieve enhanced visibility and hence safety be it during the day or at night. It is thus possible to provide a system control apparatus 30 for an electric vehicle 1 which can avoid the risk of a sudden turning-off of the supply of electric power to the entire system during the traveling of the electric vehicle 1.

By incorporating such a system control apparatus 30 in an electric vehicle 1, it is possible to provide a highly reliable electric vehicle 1 which can avoid the risk of a sudden turning-off of the supply of electric power to the entire system during traveling.

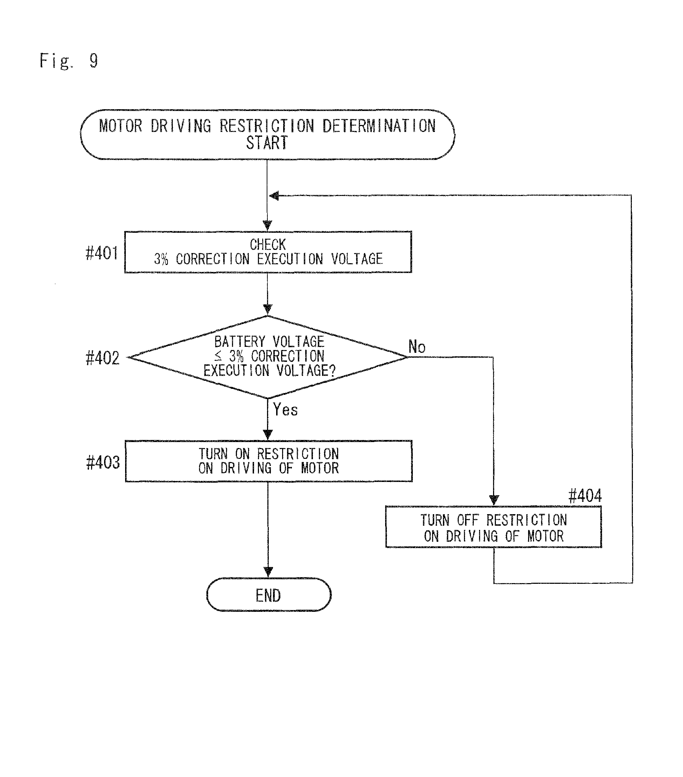

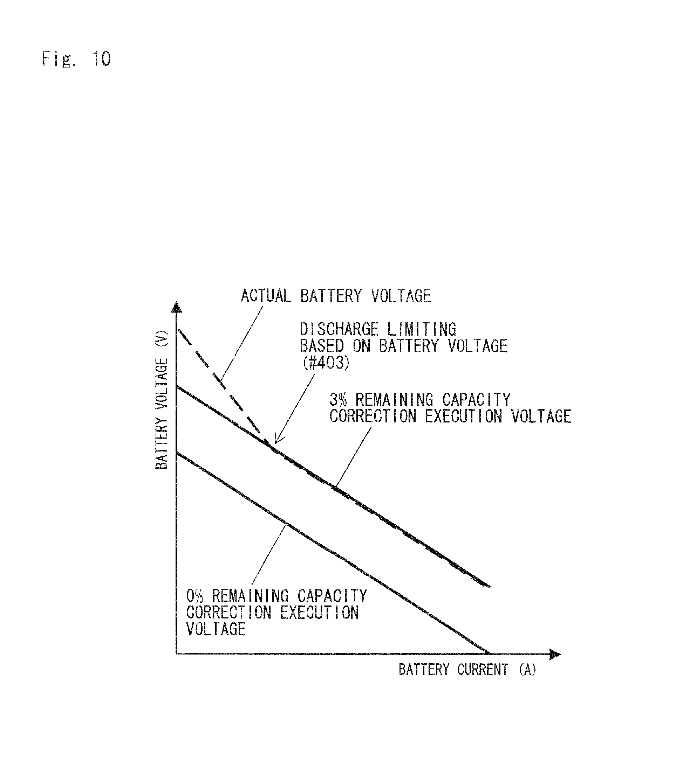

Next, a description will be given of how a system control apparatus for a mobile body according to a second embodiment of the invention operates in relation to the remaining capacity and voltage of a battery, along the flow shown in Fig. 9 and with reference to Fig. 10. Fig. 9 is a flow chart showing the operation related to determination as to motor driving restriction, and Fig. 10 is a graph showing the relationship between the battery voltage and battery discharge restriction. This embodiment has basically the same structure and configuration as the first embodiment described previously with reference to Figs. 1 to 8, and therefore such features of this embodiment as are common to the first embodiment will be omitted from illustration and description.

In the electric vehicle 1 as a mobile body according to the second embodiment, the timing with which motor driving restriction is performed is when the voltage of the battery 22 reaches the 3% correction execution voltage. The operation will now be described.

When the electric vehicle 1 is in a state where the system power is on ("START" in Fig. 9), the system controller 31 in the system control apparatus 30 refers to the battery controller 21 in the battery pack 20 to check the 3% correction execution voltage obtained at step #107 in Fig. 3 (step #401). The system controller 31 then checks whether or not the voltage of the battery 22 has reached the 3% correction execution voltage obtained at step #401 (step #402).

When the voltage of the battery 22 has reached the 3% correction execution voltage ("Yes" in step #402), the system controller 31 transmits to the motor driver 32 a control instruction to turn on restriction on the driving of the motor 15 (step #403 in Fig. 9). In response, the motor driver 32 performs motor driving restriction to restrict the discharge current by adjusting the output of the motor 15 so that the voltage of the battery 22 remains not less than the 3% correction execution voltage (step #403 in Fig. 10).

Specifically, the motor driver 32 limits the discharge current in such a way that, in Fig. 10, the actual voltage of the battery 22 (broken line) does not fall below its intersection with the 3% correction execution voltage (the upper solid line) but change along (remains located on) the 3% correction execution voltage. After motor driving restriction is performed, the flow of operation related to determination as to restriction on the driving of the motor 15 ends ("END" in Fig 9).

On the other hand, if the voltage of the battery 22 is above the 3% correction execution voltage ("No" at step #402), motor driving restriction is turned off (step #404), and the flow just returns to step #401 with no restriction performed on the driving of the motor 15.

It should be noted that, after motor driving restriction is performed, if it is difficult for the battery 22 to keep its voltage at the 3% correction execution voltage, and the voltage falls to a voltage corresponding to a remaining capacity of 3% or less ("Yes" at step #110 in Fig. 3; "Yes" at step #202 in Fig. 4), the system controller 31 turns off the driving of the motor 15 (step #203 in Fig. 4). In this way, it is possible to save the electric power of the battery 22 after the driving of the motor 15 is turned off until the power to the entire system is turned off. Thus, it is possible to supply electric power to the control system other than for motor driving, to turn on a light, etc.

It should be noted that motor driving restriction for preventing the voltage of the battery 22 from falling below the 3% correction execution voltage may be performed other than on the condition that the voltage of the battery 22 reaches the 3% correction execution voltage. Motor driving restriction may instead be performed by limiting the discharge current in accordance with the voltage of the battery 22 with respect to the 3% correction execution voltage as the voltage of the battery 22 approaches the 3% correction execution voltage. For example, it is possible to adopt a process of restricting the discharge current to an increasingly great extent as the voltage of the battery 22 approaches the 3% correction execution voltage. In that case, it is possible to adopt a process such as one whereby, for example when the voltage difference of the voltage of the battery 22 from the 3% correction execution voltage is 5 V or less, the discharge current permitted through the battery 22 is reduced by the amount of current proportional to (5 V - (Voltage Difference)).

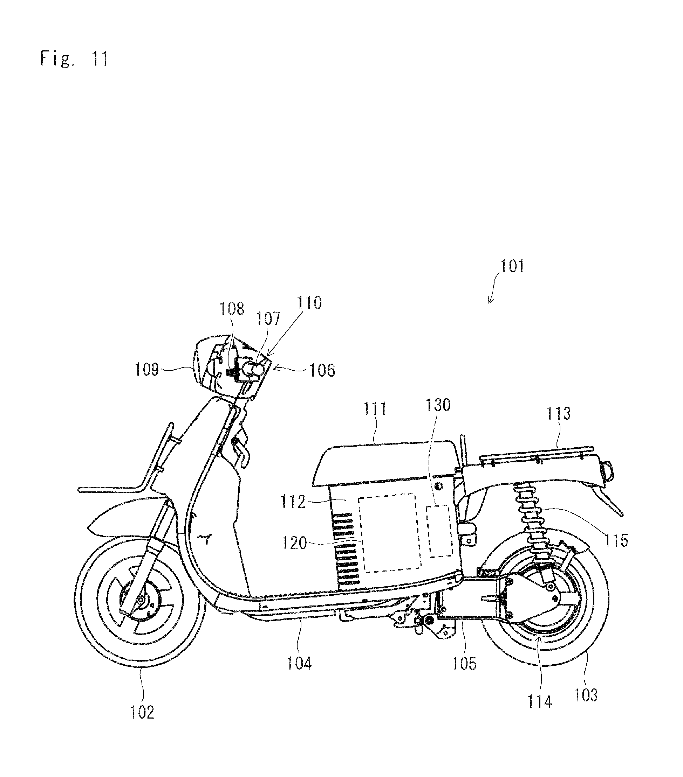

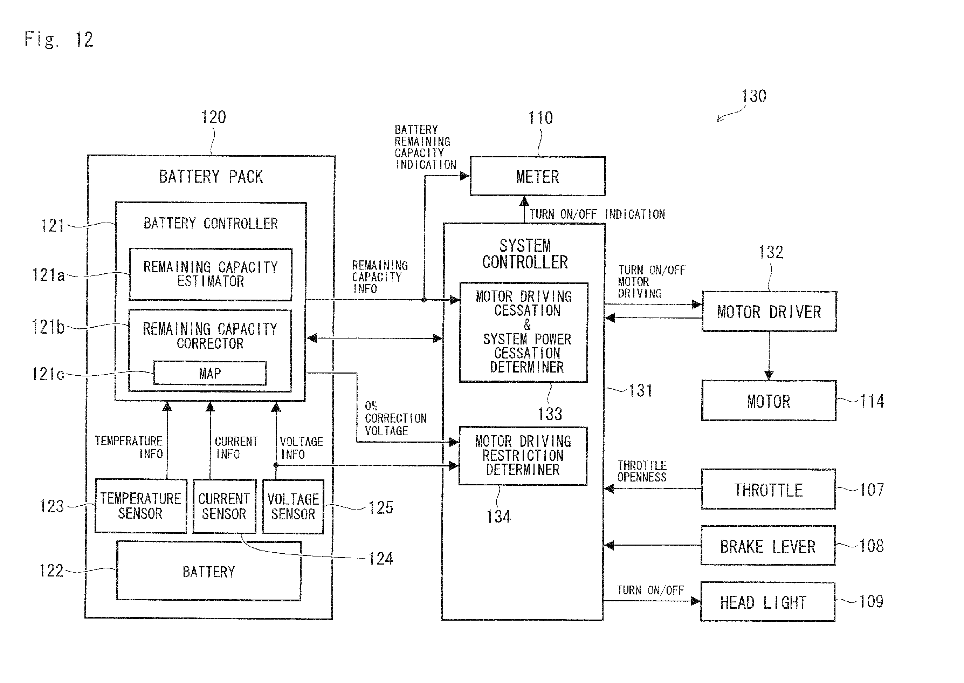

Next, a description will be given of the structure of an electric vehicle as a mobile body incorporating a system control apparatus according to a third embodiment of the invention, with reference to Figs. 11 and 12. Fig. 11 is a side view showing an example of an electric vehicle incorporating a system control apparatus, and Fig. 12 is a block diagram showing the configuration of the electric vehicle.

As shown in Fig. 11, the electric vehicle 101 is an electrically-driven two-wheel vehicle having a front wheel 102 and a rear wheel 103, and specifically it is an electric motorcycle. The electric vehicle 101 is built on a main frame 104 and a swing arm 105 as a main skeleton.

The main frame 104 has a front-end part thereof bent upward, and the front-end part supports the front wheel 102 and a handlebar 106 in a way that these can be steered. The handlebar 106 is fitted with a throttle 107, which is operated to accelerate or decelerate the electric vehicle 101, and a brake lever 108, which is operated to apply the brakes. At the front of the handlebar 106, there is provided a headlight 109 which shines light in front of the electric vehicle 101.

At the center of the handlebar 106, there is provided a meter 110. The meter 110 indicates whether the power is on or off and traveling information such as the traveling speed; it is also connected to a battery pack 120 via a signal lead (not shown) to receive and indicate information on the battery remaining capacity. The meter 110 further functions as an alert indicator which, when a fault occurs in the electric vehicle 101, indicates information on the fault by an error code or the like.

On a rear-end part of the main frame 104, in a substantially central part of the electric vehicle 1 in the front/rear direction, there are provided a seat 111, on which the rider sits, and a luggage compartment 112. The luggage compartment 112 is provided under the seat 111, and houses inside it a battery pack 120 and a system control apparatus 130. The seat 111 also serves as the lid of the luggage compartment 112, and is fit in a way that it can be opened with respect to the luggage compartment 112. At the rear of the seat 111 on the main frame 104, over the rear wheel 103, there is provided a luggage rack 113.

The swing arm 105 extends rearward from the rear part of the main frame 104 under the seat 111 and the luggage compartment 112. The rear wheel 103 is supported at the rear end of the swing arm 105. The rear wheel 103 is a driving wheel, and between it and the swing arm 105, a motor 114 is provided which drives the system control apparatus 130. Thus, the swing arm 105 supports the rotary shaft of the motor 114 and the rear wheel 103 horizontally. Moreover, from the part of the swing arm 105 where the motor 114 is provided up toward the luggage rack 113, there is provided a suspension unit 115 which keeps the motor 114 and the rear wheel 103 suspended.

As shown in Fig. 12, for overall operation control, the electric vehicle 101 is further provided with a system control apparatus 130. The system control apparatus 130 includes a system controller 131, a motor driver 132, and the above-mentioned battery pack 120.

The system controller 131 is built around a common microcomputer, and functions as a processor that controls the sequence of operation related to the running of the electric vehicle 1 according to a program and data stored and entered in the microcomputer. The system controller 131 includes a motor driving cessation (turning-off) and system power cessation (turning-off) determiner 133 and a motor driving restriction determiner 134. The motor driving cessation and system power cessation determiner 133 determines, according to the battery remaining capacity of the battery pack 120, the timing with which to turn off the driving of the motor and the timing with which to turn off the system power. The motor driving restriction determiner 134 determines, according to the battery voltage, whether to restrict the driving of the motor 114.

It should be noted that, in the electric vehicle 101, which is an electric motorcycle, turning off the system power means bringing the electric vehicle 101 into a state where any of, for example, the headlight 109, the meter 110, the turn signals (not shown), and the control system other than for motor driving is not in operation. In the case of, for example, a four-wheel vehicle, the elements of which the operation is restricted when the power to the entire system is turned off include, other than those just mentioned, wipers, audio equipment, an air conditioner, etc.

The motor driver 132 controls the electric power supplied from the battery pack 120 to drive the motor 114, and is realized with, for example, an inverter. To run the electric vehicle 101, the system controller 131 sets and transmits to the motor driver 132 a target torque for the motor 114 which reflects how open the throttle 107 is as recognized from the throttle 107 operated by the rider. Then, according to control instructions from the system controller 131, the motor driver 132 adjusts the current and voltage supplied from the battery pack 120 to drive the motor 114.

The battery pack 120 includes a battery controller 121, a battery 122, a temperature sensor 123, a current sensor 124, and a voltage sensor 125.

The battery controller 121 monitors the cell voltage, current, temperature, remaining capacity, etc. of the battery 122, and controls its charging and discharging safely. The battery controller 121 includes a remaining capacity estimator 121 a, which estimates the battery remaining capacity of the battery 122, and a remaining capacity corrector 121b.

The remaining capacity estimator 121a integrates (totalizes) the current through the battery 122 as detected by the current sensor 124, and thereby estimates the remaining capacity of the battery 122. In this way, by use of a comparatively easy method of estimating the remaining capacity of the battery 122, it is possible to reduce as much as possible the burden on the control of the entire system of the electric vehicle 101.

Except at critical timing such as when the driving of the motor 114 is turned off or when the electric power supply to the entire system is turned off, the accuracy of the indication of the battery remaining capacity on the meter 110 need not be very high. Accordingly, most of the time, the battery controller 121 uses, as the battery remaining capacity indicated on the meter 110, the estimated remaining capacity that is calculated by the remaining capacity estimator 121a with a reduced burden on the control of the entire system.

The remaining capacity corrector 121b includes a map 121c from which a correction execution voltage is obtained that corresponds to a particular remaining capacity of the battery 122 based on the relationship between the current and temperature of the battery 122. Stored in the map 121c are, for example, one corresponding to a first predetermined remaining capacity of 3% and one corresponding to a second predetermined remaining capacity of 0%. The remaining capacity corrector 121b corrects the estimated remaining capacity of the battery 122 as estimated by the remaining capacity estimator 121a on the condition that the voltage of the battery 122 falls to or below each of the correction execution voltages corresponding remaining capacities of 3% and 0%. Thus, when the estimated remaining capacity of the battery 122 is 3% and again when it is 0%, the remaining capacity can be corrected to be more accurate.

It should be noted that the map 121c is one from which a correction execution voltage is obtained that corresponds to a particular remaining capacity of the battery 122 on the basis of the relationship between the current and temperature of the battery 122, and is used for the correction of the estimated remaining capacity of the battery 122 as estimated by the remaining capacity estimator 121a. The remaining capacity corrector 121b corrects the estimated remaining capacity of the battery 122 estimated by the remaining capacity estimator 121 a on the basis of the voltage, current, and temperature of the battery 122, and therefore the map 121c can be constructed with the voltage, current, and temperature of the battery 122 handled as variables respectively.

Here, it is only necessary to use at least one of the voltage, current, and temperature of the battery 122 as a variable. That is, it is possible to use only one of the voltage, current, and temperature of the battery 122 as a variable, or to use a combination of any two of them as variables. For example, a correction execution voltage may be determined according to the voltage of the battery 122, irrespective of the current or temperature. For another example, a correction execution voltage may be determined according to the current, or temperature, of the battery 122. For yet another example, a correction execution voltage may be determined according to the current and temperature of the battery 122.

The battery 122 is composed of a plurality of battery cells connected in series and in parallel. The temperature sensor 123 is a sensor that detects the temperature of the battery 122, and may comprise a plurality of sensors provided one for every predetermined number of battery cells. The current sensor 124 measures the current through the battery 122 during its charging and discharging. The voltage sensor 125 measures the voltage across the battery 122, or the voltage across each battery cell in the battery 122. It should be noted that the battery 122 is the source of electric power supply to all the constituent components of the electric vehicle 101 that need electric power.

In the electric vehicle 101 structured and configured as described above, the system control apparatus 130 has basically the same configuration as in the first embodiment, and therefore operates in a similar manner as described above with reference to Figs. 3 to 8. Specifically, the system controller 131 turns off the driving of the motor 114 on the condition that the remaining capacity of the battery 122 as first estimated by the remaining capacity estimator 121a and then corrected by the remaining capacity corrector 121b based on the voltage, current, and temperature of the battery 122 falls to or below the first predetermined remaining capacity of 3%. Moreover, the system controller 131 turns off the supply of electric power to the entire system of the electric vehicle 101 on the condition that the corrected remaining capacity of the battery 122 falls to or below the second predetermined remaining capacity of 0%. At this time, the system controller 131 turns off, for example, the headlight 109.

For more details, reference is to be made to the description of the first embodiment given with reference to Figs. 3 to 8, and no overlapping description will be repeated. As in the second embodiment, the system control apparatus 130 may perform motor driving restriction on the condition that the voltage of the battery 122 reaches the 3% correction execution voltage.

With the configuration described above, it is possible, by incorporating a system control apparatus 130 according to the invention in an electric vehicle 101 as a mobile body, specifically an electric motorcycle, to provide a highly reliable electric motorcycle which can avoid the risk of a sudden turning-off of the supply of electric power to the entire system during traveling.

It should be understood that the embodiments by way of which the present invention has been described are in no way meant to limit the scope of the invention, and that the invention may be put to practice with many variations and modifications made without departing from the spirit of the invention.

For example, although the embodiments mainly deal with cases in which an electric bicycle as shown in Fig. 1 is taken up as an example of an electric vehicle 1 as a mobile body incorporating a system control apparatus 30, this is not meant to limit the electric vehicles in which it can be incorporated to electric bicycles; it may also be incorporated in electric motorcycles (two-wheel vehicles) like the one shown in Fig. 11 as the third embodiment, and in electric automobiles (four-wheel vehicles).

The mobile bodies in which a system control apparatus according to the invention can be incorporated further include watercraft such as motorboats, amusement cars, boats, and other vehicles, and any vehicles that use a motor as their driving power source and that move unmanned, that is, with no man aboard.

Although the embodiments described above deal with cases in which the first predetermined remaining capacity of the battery 22 at which the turning off of the driving of the motor 15 is determined is set at 3% and the second predetermined remaining capacity of the battery 22 at which the turning off of the power to the entire system is determined is set at 0%, this is not meant to limit those predetermined remaining capacities to 3% and 0% respectively; they may be set at any other values, for example 5% and 1%. These predetermined remaining capacities may be set at, instead of relative values such as 3% and 0%, absolute or any other type of values, such as 300 mAh and 0 mAh.

In the embodiments described above, when the estimated remaining capacity of the battery 22 changes while remaining slightly less than the actual remaining capacity (see Fig. 6), the estimated remaining capacity is held at 4% at step #104 in Fig. 3 and in Fig. 6 before it falls to 3%, and is again held at 1% at step #106 in Fig. 3 and in Fig. 6 before it falls to 0%. This, however, is not meant to limit the values at which the estimated remaining capacity is held to 4% and 1% respectively; the estimated remaining capacity may be held at any other values, such as 3.5% and 0.5%.

## Claims

1. A system control apparatus for a mobile body which controls a motor and an entire system of the mobile body while monitoring a remaining capacity of a battery, the apparatus comprising:
a remaining capacity estimator which estimates the remaining capacity of the battery;
a remaining capacity corrector which corrects the remaining capacity of the battery estimated by the remaining capacity estimator based on at least one of a voltage, a current, and a temperature of the battery; and
a system controller which turns off driving of the motor on a condition that the remaining capacity of the battery corrected by the remaining capacity corrector becomes equal to or less than a first predetermined remaining capacity.

2. The apparatus according to claim 1, wherein the system controller turns off power to the entire system on a condition that the remaining capacity of the battery corrected by the remaining capacity corrector becomes equal to or less than a second predetermined remaining capacity which is less than the first predetermined remaining capacity.

3. The apparatus according to claim 1 or 2, wherein the remaining capacity estimator estimates the remaining capacity of the battery by integrating the current through the battery.

4. The apparatus according to claim 1, 2 or 3, wherein the remaining capacity corrector has a map from which a correction execution voltage is obtained which corresponds to a particular capacity of the battery based on a relationship between the current and temperature of the battery, and the remaining capacity corrector corrects the estimated remaining capacity of the battery estimated by the remaining capacity estimator on a condition that the voltage of the battery becomes equal to or less than each of two correction execution voltages obtained from the map, one corresponding to the first predetermined remaining capacity and another corresponding to a second predetermined remaining capacity which is less than the first predetermined remaining capacity.

5. The apparatus according to any of claims 1 to 4, wherein motor driving restriction is performed to limit a discharge current according to the voltage of the battery with respect to a voltage corresponding to a second predetermined remaining capacity which is less than the first predetermined remaining capacity.

6. The apparatus according to any of claims 1 to 4, wherein motor driving restriction is performed, on a condition that the voltage of the battery becomes equal to or less than a voltage corresponding to a second predetermined remaining capacity which is less than the first predetermined remaining capacity, to limit a discharge current by adjusting an output of the motor such that the voltage of the battery becomes more than the voltage corresponding to the second predetermined remaining capacity.

7. The apparatus according to any of claims 1 to 4, wherein motor driving restriction is performed to limit a discharge current according to the voltage of the battery with respect to a voltage corresponding to the first predetermined remaining capacity.

8. The apparatus according to any of claims 1 to 4, wherein motor driving restriction is performed, on a condition that the voltage of the battery reaches a voltage corresponding to the first predetermined remaining capacity, to limit a discharge current by adjusting an output of the motor such that the voltage of the battery does not become less than the voltage corresponding to the first predetermined remaining capacity.

9. The apparatus according to any one of claims 5 to 8, wherein the voltage of the battery at which the motor driving restriction is performed is calculated by a battery controller which is provided in the battery to control operation of the battery.

10. A mobile body incorporating the apparatus according to any one of claims 1 to 9.

11. A mobile body incorporating the apparatus according to any of claims 1 to 9, comprising:
a headlight which shines light in front of the mobile body,
wherein the system controller puts out the headlight when the remaining capacity of the battery corrected by the remaining capacity corrector becomes equal to or less than a second predetermined remaining capacity which is less than the first predetermined remaining capacity.
